# EUROPÄISCHE PATENTANMELDUNG

(11) **EP 1 892 735 A1**
(43) Veröffentlichungstag der Anmeldung: **27.02.2008**
(21) Anmeldenummer: 06017506.4
(22) Anmeldetag: 23.08.2006
(51) Int. Cl.: H01H 13/56, B60Q 1/14

(54) **Verriegelbarer Druckknopfschalter**

(71) Anmelder: Delphi Technologies, Inc., Troy, Michigan 48007 (US)
(72) Erfinder: Geppert, Michael, 55411 Bingen (DE); Dietrich, Andreas, 55452 Guldental (DE)
(74) Vertreter: Becker, Bernd

(57) **Zusammenfassung**

Ein verrastender Druckschalter (4) umfasst einen bei einer Beaufschlagung relativ gegenüber einem Bauteil (1) verschiebbaren Stößel (6), wobei zwischen dem Bauteil (1) und dem Stößel (6) eine mit einer Herzkurve (5) zusammenwirkende Klinke (8) angeordnet ist. Der Klinke (8) ist eine Reibungsbremse (12) zugeordnet.

## Beschreibung

Die Erfindung bezieht sich auf einen verrastenden Druckschalter mit einem bei einer Beaufschlagung relativ gegenüber einem Bauteil verschiebbaren Stößel, wobei zwischen dem Bauteil und dem Stößel eine mit einer Herzkurve zusammenwirkende Klinke angeordnet ist.

Die DE 43 09 711 C1 offenbart einen Lenkstockschalter mit einem Schalthebel, der an seinem freien Ende eine federbelastete Drucktaste zur Beaufschlagung eines elektrischen Schaltkreises trägt. Die Drucktaste steht über eine federbelastete Schubstange mit einem in der Drehachse des Schalthebels liegenden, schwenkbeweglich gelagerten Querhebel in Wirkverbindung, der an seinem verschwenkbaren Ende mit einem federbelasteten Schaltglied verbunden ist, das eine Herzkurve aufweist, in die eine gehäuseseitig federbelastet gelagerte Rastklinke eingreift. Die Rastklinke weist einen sich gegenüber einem Klinkenarm verbreiternden und in einer Öffnung zentrierenden Klinkenfuß auf, an dem von unten eine Druckfeder anliegt, damit die Klinke dem Verlauf der Herzkurve zuverlässig in jeder beliebigen Lage des Lenkstockschalters bzw. Schalthebels folgt. Ohne die Druckfeder besteht die Gefahr, dass die Rastklinke bei einer entsprechenden Neigung des Lenkstockschalters bzw. Schalthebels eine Lage einnimmt, in der sie beispielsweise entgegen der normalen Umlaufrichtung um die Herzkurve läuft oder sich in der Führung verhakt, wonach ein fehlerfreies Schalten nicht mehr gewährleistet ist. Als problematisch stellt sich jedoch der Platzbedarf für die Anordnung der Druckfedern, der Rastklinke sowie der Herzkurve dar.

Es ist Aufgabe der Erfindung, einen verrastenden Druckschalter der eingangs genannten Art zu schaffen, der bei einem kompakten Aufbau in einer beliebigen Lage verwendbar ist.

Erfindungsgemäß wird die Aufgabe dadurch gelöst, dass der Klinke eine Reibungsbremse zugeordnet ist.

Aufgrund der Reibungsbremse ist ein unbeabsichtigtes Verlagern der Klinke aufgrund ihres Eigengewichtes bei einer beispielsweise einbau- oder funktionsbedingten Schräglage ausgeschlossen. Die Klinke wird bei der Montage des Druckschalters entsprechend zu der Herzkurve ausgerichtet und anschließend durch die Reibungsbremse beaufschlagt. Eine darauf folgende Lageänderung des Druckschalters wirkt sich nicht auf die Lage der Klinke zu der Herzkurve aus, die sich lediglich durch eine Druckbeaufschlagung des Betätigungselementes ändert. Unter einer Reibungsbremse ist im Sinne der Erfindung kein Einpressen der Klinke in eine Öffnung eines Teils des Druckschalters zu verstehen. Vielmehr umfasst die Reibungsbremse zumindest ein die Bremskraft erzeugendes oder übertragendes Bauteil.

Vorzugsweise ist die Klinke als abgewinkelter Stab ausgebildet, dessen eines Ende schwenkbar in eine Bohrung und dessen anderes Ende in die Herzkurve eingreift, wobei die Reibungsbremse eine Druckfeder umfasst, die das in die Bohrung eingesetzte Ende der Klinke beaufschlagt. Hierbei ist beispielsweise das in die Querbohrung eingesetzte Ende so lang bemessen, dass es das Bauteil komplett durchragt und auf beiden Seiten übersteht, damit sich die Druckfeder darauf abstützen kann. Die Bremswirkung wird aufgrund der zwischen der Klinke und dem Bauteil unter der Federwirkung herrschenden Reibungskraft erzeugt. Selbstverständlich ist es möglich, der Druckfeder eine weitere Funktion, beispielsweise die Beaufschlagung des Betätigungsknopfes zu dessen Rückstellung, zuzuordnen.

Vorzugsweise umfasst die Reibungsbremse ein zwischen der Druckfeder und der Klinke angeordnetes Druckteil. Das Druckteil kann insbesondere sowohl auf der der Klinke zugeordneten Seite als auch auf der druckfederseitigen Seite eine verhältnismäßig große Auflagefläche zu Sicherstellung der Bremswirkung aufweisen. Im Weiteren kann das Druckteil als separates Bauteil nach der Art eines Bremsklotzes ausgeführt sein und die Klinke druckfederbelastet beaufschlagen. Bei der Verwendung eines relativ weichen Werkstoffes ist sowohl eine gute Bremswirkung als auch eine Geräuschdämpfung realisiert. Selbstverständlich ist das Druckteil zu der Klinke verlagerbar geführt.

Bevorzugt weist das Druckteil auf der der Klinke zugewandten Seite eine dem Querschnitt der Klinke angepasste Ausnehmung auf. Zweckmäßigerweise ist das Druckteil aus einem Kunststoff gefertigt.

In Ausgestaltung ist zur Platz sparenden Ausgestaltung der Schaltermechanik die Klinke doppelt abgewinkelt. Die Klinke kann demnach Z-förmig gestaltet sein. Zur Platz sparenden Anordnung weisen die Abwinklungen in die gleiche Richtung. Demnach ist die Klinke im Wesentlichen U-förmig ausgebildet.

Nach einer Weiterbildung liegt die Druckfeder unter Vorspannung an einem Betätigungsknopf an. Sonach erstreckt sich die Druckfeder zwischen dem Betätigungsknopf und der Klinke, wobei der Druck auf die Klinke bei einer Beaufschlagung des Betätigungsknopfes erhöht wird.

Um den Betätigungsknopf in einer verrasteten Schaltstellung zu halten, ist vorzugsweise der Betätigungsknopf mit dem die Herzkurve aufweisenden Stößel verbunden.

In weiterer Ausgestaltung ist ein die Klinke lagerndes Bauteil ein Hebel eines Lenkstockschalters, an dessen freier Stirnseite der Betätigungsknopf gelagert ist. Der Hebel selbst kann selbstverständlich mit seinem Fuß verschwenkbar gelagert sein bzw. einen Drehschalter lagern, um eine Vielzahl von Funktionen zu schalten.

Bevorzugt ist das Druckteil einstückig mit dem Hebel ausgebildet. Durch eine entsprechende Querschnittsschwächung ist ein bewegliches, insbesondere zu dem Hebel und der Klinke verschwenkbares, Druckteil zu realisieren, das druckfederbelastet die Klinke beaufschlagt, die sich im Weiteren gegen den Hebel abstützt. In dieser Ausgestaltung kann die Querbohrung beispielsweise die eine Hälfte des Querschnitts des Hebels durchragen, während die andere Hälfte des Querschnitts des Hebels durch das Druckstück gebildet ist. Demnach ist die Klinke zwischen dem Hebel und dem Druckstück eingespannt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

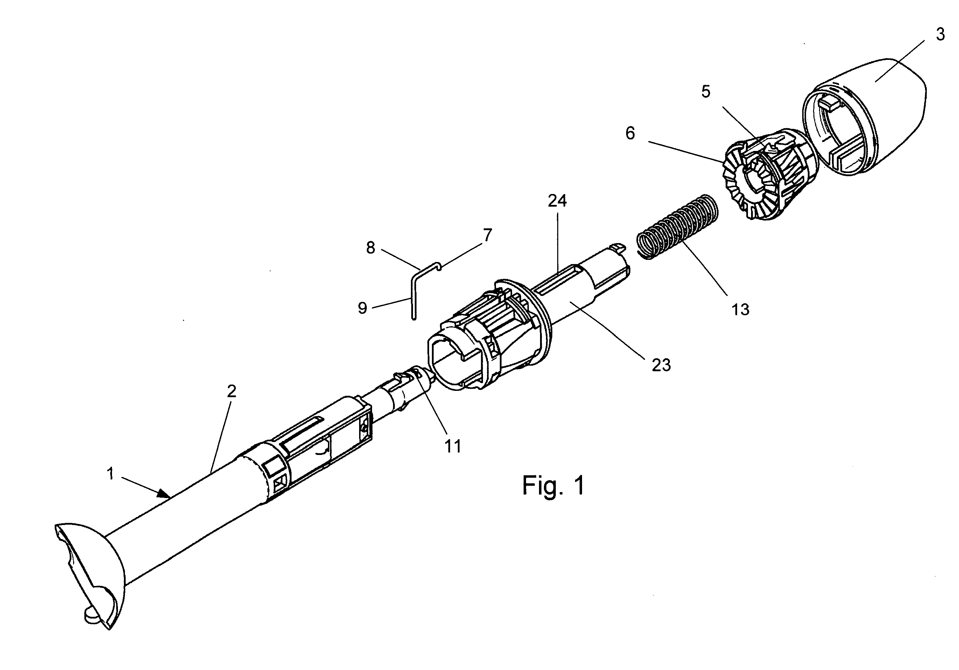

- Fig.1: eine perspektivische Teildarstellung eines Lenkstockschalters mit einem erfindungsgemäßen Druckschalter,
- Fig.2: eine Draufsicht auf den Lenkstockschalter nach Fig. 1,
- Fig.3: eine vergrößerte Darstellung einer Einzelheit III nach Fig. 2 in gedrehter Lage,

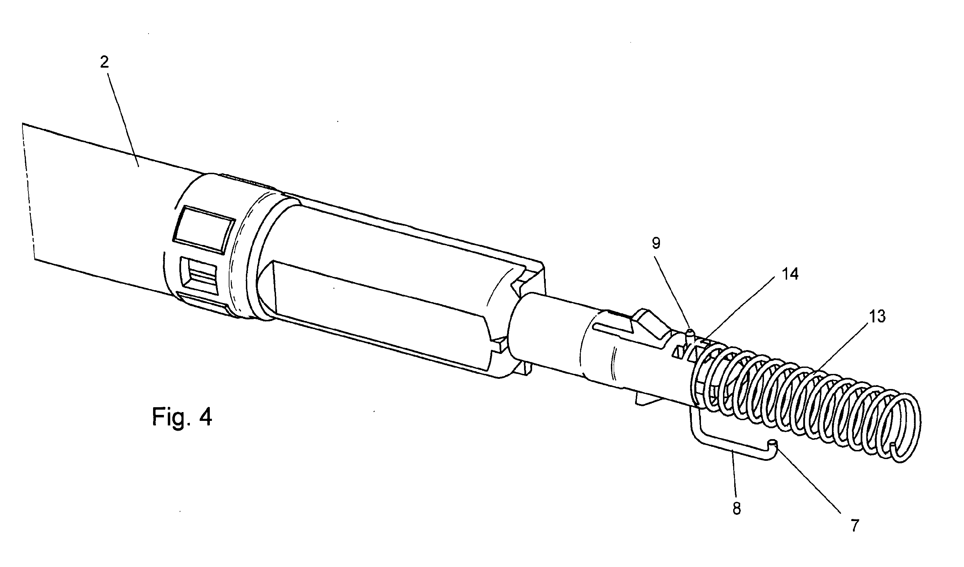

- Fig.4: eine weitere perspektivische Teildarstellung des Lenkstockschalters nach Fig. 1 und

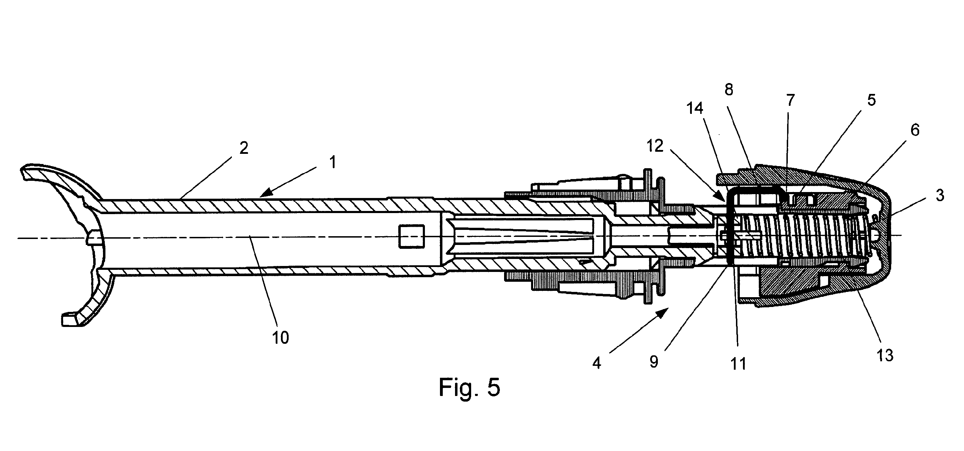

- Fig.5: eine Seitenansicht des Lenkstockschalters nach Fig. 1.

Der Lenkstockschalter umfasst ein Bauteil 1, das als ein fußseitig gelagerter Hebel 2 ausgestaltet ist, an dessen freier Stirnseite ein Betätigungsknopf 3 des Druckschalters 4 gelagert ist, wobei der Betätigungsknopf 3 mit einem eine Herzkurve 5 aufweisenden Stößel 6 verbunden ist.

Um den relativ gegenüber dem Hebel 2 verschiebbaren Betätigungsknopf 3 in einer beaufschlagten Lage verrastet zu halten, greift in die Herzkurve 5 ein Ende 7 einer doppelt abgewinkelten Klinke 8 ein, deren anderes Ende 9 in einer quer zur Längsachse 10 verlaufenden Bohrung 11 schwenkbar gelagert ist. Damit die Klinke 8 in einer beliebig geneigten Lage des Hebels 2 nicht unkontrolliert verschwenkt, ist der Klinke 8 eine Reibungsbremse 12 zugeordnet, die eine vorgespannte Druckfeder 13 und ein zwischen einem Ende der Druckfeder 13 und der Klinke 8 angeordnetes Druckteil 14 umfasst, wobei das andere Ende der Druckfeder 13 den Betätigungsknopf 3 beaufschlagt. Das Druckteil 14 ist einstückig mit dem Hebel 2 ausgebildet, in dem eine Querschnittschwächung vorgesehen ist, aufgrund der ein Verschwenken des druckfederbelasteten Druckstückes 14 gegenüber dem Hebel 2 und damit eine Druckbeaufschlagung der Klinke 8 möglich ist.

Aufgrund der Wirkung der Druckfeder 13 behält die Klinke 8 die bei der Montage oder am Ende eines Schaltvorganges eingenommene Lage bei und verschwenkt nicht selbsttätig aufgrund ihrer Gewichtskraft. Auf dem Hebel 2 ist ein mit dem Stößel 6 verbundenes Schaltstück 23 gelagert, das ein Langloch 24 aufweist, durch das das dem Hebel 2 zugeordnete Ende 9 der Klinke 8 ragt.

Bei einer Druckbeaufschlagung des Betätigungsknopfes 3 entgegen der Wirkung der Druckfeder 13 folgt die von der Reibungsbremse 12 beaufschlagte Klinke 8 der Richtung des Pfeils 25 um die Herzkurve 5 bis sie in eine Einbuchtung 15 gelangt, die einen Anschlag für die Druckbeaufschlagung darstellt. Nach einem Loslassen des Betätigungsknopfes 3 gleitet die Klinke 8 aus der Einbuchtung 15 und folgt der Richtung des Pfeils 16 bis sie in einer Vertiefung 17 der Herzkurve 5 einliegt, die die verrastete Lage des Betätigungsknopfes 3 darstellt. Bei einer erneuten Druckbeaufschlagung des Betätigungsknopfes 3 überwindet die Klinke 8 eine Spitze 18 der Herzkurve 5 und folgt der Richtung des Pfeils 19 in eine Einbuchtung 20. Nach einem Loslassen des Betätigungsknopfes 3 gleitet die Klinke 8 in Richtung der Pfeile 21, 22, bis sich der Betätigungsknopf 3 in seiner unverrasteten Ausgangslage befindet.

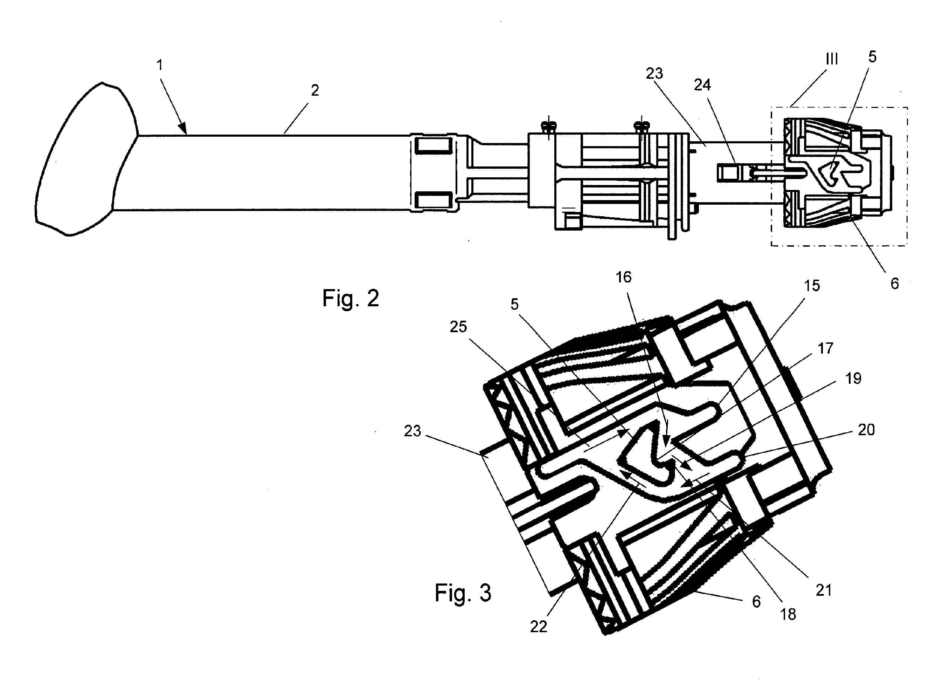

Bei einem gemäß Fig. 3 geneigten Druckschalter, bei dem der Klinke 8 keine Reibungsbremse 12 zugeordnet ist, besteht die Gefahr, dass die Klinke 8 aufgrund ihrer Gewichtskraft derart verschwenkt, dass sie bei einer Druckbeaufschlagung des Betätigungsknopfes 3 mit dem der Herzkurve 5 zugeordneten Ende 7 die Herzkurve 5 entgegen der Richtung der Pfeile 22, 21 umläuft und in der gedrückten Endlage des Betätigungsknopfes 3 in die Einbuchtung 20 gelangt. Nach einem Loslassen des Betätigungsknopfes 3 gleitet die Klinke 8 in Richtung der Pfeile 21, 22 in ihre Ausgangslage und eine einwandfreie Funktion des Druckschalters 4 ist nicht gewährleistet.

## Patentansprüche

1. Verrastender Druckschalter (4) mit einem bei einer Beaufschlagung relativ gegenüber einem Bauteil (1) verschiebbaren Stößel (6), wobei zwischen dem Bauteil (1) und dem Stößel (6) eine mit einer Herzkurve (5) zusammenwirkende Klinke (8) angeordnet ist, **dadurch gekennzeichnet, dass** der Klinke (8) eine Reibungsbremse (12) zugeordnet ist.

2. Druckschalter nach Anspruch 1, **dadurch gekennzeichnet, dass** die Klinke (8) als abgewinkelter Stab ausgebildet ist, dessen eines Ende (9) schwenkbar in eine Bohrung (11) und dessen anderes Ende (7) in die Herzkurve (5) eingreift, wobei die Reibungsbremse (12) eine Druckfeder (13) umfasst, die das in die Bohrung (11) eingesetzte Ende (9) der Klinke (8) beaufschlagt.

3. Druckschalter nach Anspruch 1 oder 2, **dadurch gekennzeichnet, dass** die Reibungsbremse (12) ein zwischen der Druckfeder (13) und der Klinke (8) angeordnetes Druckteil (14) umfasst.

4. Druckschalter nach Anspruch 3, **dadurch gekennzeichnet, dass** das Druckteil (14) auf der der Klinke (8) zugewandten Seite eine dem Querschnitt der Klinke (8) angepasste Ausnehmung aufweist.

5. Druckschalter nach Anspruch 3 oder 4, **dadurch gekennzeichnet, dass** das Druckteil (14) aus einem Kunststoff gefertigt ist.

6. Druckschalter nach einem der Ansprüche 1 bis 5, **dadurch gekennzeichnet, dass** die Klinke (8) doppelt abgewinkelt ist.

7. Druckschalter nach Anspruch 6, **dadurch gekennzeichnet, dass** die Abwinklungen in die gleiche Richtung weisen.

8. Druckschalter nach Anspruch 2 oder 3, **dadurch gekennzeichnet, dass** die Druckfeder (13) unter Vorspannung an einem Betätigungsknopf (3) anliegt.

9. Druckschalter nach Anspruch 8, **dadurch gekennzeichnet, dass** der Betätigungsknopf (3) mit dem die Herzkurve (5) aufweisenden Stößel (6) verbunden ist.

10. Druckschalter nach einem der Ansprüche 1 bis 9, **dadurch gekennzeichnet, dass** ein die Klinke (8) lagerndes Bauteil ein Hebel (2) eines Lenkstockschalters ist, an dessen freier Stirnseite der Betätigungsknopf (3) gelagert ist.

11. Druckschalter nach einem der Ansprüche 1 bis 9, **dadurch gekennzeichnet, dass** das Druckteil (14) einstückig mit dem Hebel (2) ausgebildet ist.

## Geänderte Patentansprüche

### Geänderte Patentansprüche gemäss Regel 137(2) EPÜ.

**1.** Verrastender Druckschalter (4) mit einem bei einer Beaufschlagung relativ gegenüber einem Bauteil (1) verschiebbaren Stößel (6), wobei zwischen dem Bauteil (1) und dem Stößel (6) eine mit einer Herzkurve (5) zusammenwirkende Klinke (8) angeordnet ist, und ein die Klinke (8) lagerndes Bauteil ein Hebel (2) eines Lenkstockschalters ist, an dessen freier Stirnseite ein Betätigungsknopf (3) des Druckschalters (4)gelagert ist, **dadurch gekennzeichnet, dass** der Klinke (8) eine Reibungsbremse (12) zugeordnet ist, die ein zwischen der Druckfeder (13) und der Klinke (8) angeordnetes Druckteil (14) umfasst, das auf der der Klinke (8) zugewandten Seite eine dem Querschnitt der Klinke (8) angepasste Ausnehmung aufweist.

**2.** Druckschalter nach Anspruch 1, **dadurch gekennzeichnet, dass** die Klinke (8) als abgewinkelter Stab ausgebildet ist, dessen eines Ende (9) schwenkbar in eine Bohrung (11) und dessen anderes Ende (7) in die Herzkurve (5) eingreift, wobei die Druckfeder (13) der Reibungsbremse (12) das in die Bohrung (11) eingesetzte Ende (9) der Klinke (8) beaufschlagt.

**3.** Druckschalter nach Anspruch 1, **dadurch gekennzeichnet, dass** das Druckteil (14) aus einem Kunststoff gefertigt ist.

**4.** Druckschalter nach einem der Ansprüche 1 bis 3, **dadurch gekennzeichnet, dass** die Klinke (8) doppelt abgewinkelt ist.

**5.** Druckschalter nach Anspruch 4, **dadurch gekennzeichnet, dass** die Abwinklungen in die gleiche Richtung weisen.

**6.** Druckschalter nach Anspruch 1 oder 2, **dadurch gekennzeichnet, dass** die Druckfeder (13) unter Vorspannung an dem Betätigungsknopf (3) anliegt.

**7.** Druckschalter nach Anspruch 7, **dadurch gekennzeichnet, dass** der Betätigungsknopf (3) mit dem die Herzkurve (5) aufweisenden Stößel (6) verbunden ist.

**8.** Druckschalter nach einem der Ansprüche 1 bis 3, **dadurch gekennzeichnet, dass** das Druckteil (14) einstückig mit dem Hebel (2) ausgebildet ist.
